# EUROPÄISCHE PATENTANMELDUNG

(11) **EP 3 495 113 A2**
(43) Veröffentlichungstag der Anmeldung: **12.06.2019**
(21) Anmeldenummer: 18209082.9
(22) Anmeldetag: 29.11.2018
(51) Int. Cl.: B29C 63/04, B65G 47/52

(54) **UMMANTELUNGSVORRICHTUNG**

(30) Priorität: 08.12.2017 DE 102017129230
(71) Anmelder: Ebbinghaus, Heinrich, 33415 Verl (DE)
(72) Erfinder: Ebbinghaus, Heinrich, 33415 Verl (DE); Mettenmeyer, Matthias, 33378 Rheda-Wiedenbrück (DE)
(74) Vertreter: Ostermann, Thomas

(57) **Zusammenfassung**

Die Erfindung betrifft eine Vorrichtung zur Ummantelung von langgestreckten Werkstücken mit einem Ummantelungsmodul umfassend ein in Transportrichtung der Werkstücke verlaufendes Maschinenbett, eine Fördereinrichtung zum Transportieren der Werkstücke in der Transportrichtung, eine Anzahl von in Transportrichtung hintereinander angeordneten Ummantelungswerkzeugen zum Anpressen des Ummantelungsmaterials an die Werkstücke, wobei die Fördereinrichtung ein Endlosfördermittel zur Bildung einer die Werkstücke auf einem Obertrum des Endlosfördermittels aufnehmenden Transportbahn aufweist.

## Beschreibung

Die Erfindung betrifft eine Vorrichtung zur Ummantelung von langgestreckten Werkstücken mit einem Ummantelungsmodul umfassend ein in Transportrichtung der Werkstücke verlaufendes Maschinenbett, eine Fördereinrichtung zum Transportieren der Werkstücke in der Transportrichtung, eine Anzahl von in Transportrichtung hintereinander angeordneten Ummantelungswerkzeugen zum Anpressen des Ummantelungsmaterials an die Werkstücke.

Aus der EP 2 722 156 A1 ist eine Vorrichtung zur Ummantelung von langgestreckten Werkstücken bekannt, die ein Ummantelungsmodul mit einem Maschinenbett, einer Fördereinrichtung zum Transportieren der Werkstücke in Transportrichtung sowie Ummantelungswerkzeuge umfasst. Das Maschinenbett ist seitlich verschiebbar, so dass einer Klebstoffstation zum Auftragen von Klebstoff auf das Ummantelungsmaterial relativ schnell unterschiedliche Ummantelungsmodule zugeordnet werden können. Nachteilig an der bekannten Vorrichtung ist, dass der Platzbedarf relativ groß ist, da die für unterschiedlich profilierte Werkstücke vorgesehene Ummantelungsmodule stets in einem Abstand nebeneinander angeordnet sein müssen. Falls die umzurüstenden Ummantelungsmodule in einem Nebenraum platziert sein soll, müsste in der Fertigungsstätte ein entsprechendes Schienensystem zum Transportieren der Ummantelungsmodule installiert sein.

Aus der EP 0 997 260 B1 ist eine Vorrichtung zur Ummantelung von langgestreckten Werkstücken bekannt, die ein Ummantelungsmodul mit einem Maschinenbett, einer Fördereinrichtung zum Transportieren der langgestreckten Werkstücke in Transportrichtung sowie einer Anzahl von in Transportrichtung hintereinander angeordneten Ummantelungswerkzeugen zum Anpressen des Ummantelungsmaterials aufweist. Das Ummantelungswerkzeug weist im Wesentlichen zylindrische Rollenelemente auf, die auf dem Werkstück abrollen und damit das zwischen dem Werkstück und der Rolle angeordnete, durchlaufende Ummantelungsmaterial an das Werkstück anpressen. Da das Ummantelungsmaterial, wenn es insbesondere ein funierartiges Ummantelungsmaterial ist, nicht beliebig verformbar ist, erfolgt die Ummantelung in mehreren Verformungsschritten, wobei die Ummantelungswerkzeuge in Transportrichtung in Abhängigkeit vom Profil des Werkstücks entsprechend eingestellt werden müssen. Dies erfordert relativ aufwendige Umrüstarbeiten. Zur erleichterten Einstellung der Ummantelungswerkzeuge sind die transversal und rotatorisch bewegbar angeordneten Ummantelungswerkzeuge über eine Steuereinrichtung während des Betriebs automatisch einrichtbar. Dies erfordert jedoch einen relativ großen elektronischen Steuerungsaufwand, der mit erheblichen Kosten verbunden ist.

Aufgabe der vorliegenden Erfindung ist es, eine Vorrichtung zur Ummantelung von langgestreckten Werkstücken derart weiterzubilden, dass der Platzbedarf und Aufwand zum Ummanteln von unterschiedlich profilierten Werkstücken verringert wird, wobei insbesondere die langgestreckten Werkstücke in Umfangsrichtung vollständig bei hoher Qualität ummantelt werden.

Zur Lösung dieser Aufgabe ist die Erfindung in Verbindung mit dem Oberbegriff des Patentanspruchs 1 dadurch gekennzeichnet, dass die Fördereinrichtung ein Endlosfördermittel zur Bildung einer die Werkstücke auf einem Obertrum des Endlosfördermittels aufnehmenden Transportbahn aufweist.

Nach der Erfindung weist die Fördereinrichtung ein sich in Transportrichtung erstreckendes Endlosfördermittel auf, auf dessen Obertrum die langgestreckten Werkstücke in Transportrichtung transportiert werden. Vorteilhaft wird hierdurch eine in Transportrichtung erstreckende kontinuierliche Auflagefläche für das zu transportierende langgestreckte Werkstück geschaffen, was die Qualität der Ummantelung verbessert. Vorteilhaft ermöglicht der Endlosfördermittelantrieb eine erhebliche Verkürzung des Ummantelungsmoduls, was den Platzbedarf reduziert.

Nach einer bevorzugten Ausführungsform der Erfindung ist das Endlosfördermittel über eine Mehrzahl von Umlenkrollen geführt, wobei ein U-förmiger Förderabschnitt gebildet wird. Der U-förmige Förderabschnitt wird durch zwei in Transportrichtung beabstandet zueinander angeordnete Trennrollen begrenzt, wobei eine Transportbahnlücke geschaffen wird. Eine erste Trennrolle bildet den Abschluss eines ersten Transportbahnsegmentes und eine zweite Trennrolle bildet den Anfang eines zweiten Transportbahnsegmentes. Es versteht sich, dass der Abstand der beiden Trennrollen zueinander kleiner ist als eine Länge des langgestreckten Werkstücks, damit dieses auf der Transportbahn verbleibt. Vorteilhaft wird mit der den U-förmigen Förderabschnitt aufweisende Transportbahnlücke Freiraum geschaffen, damit Ummantelungswerkzeuge das Werkstück auch von unten her angreifen bzw. anpressen können. Eine in Umfangsrichtung vollständige Ummantelung der Werkstücke ist hierdurch gewährleistet.

Nach einer Weiterbildung der Erfindung sind mindestens einer Trennrolle Stellmittel zugeordnet, so dass die Trennrolle in Transportrichtung in unterschiedliche Arbeitsstellungen verschiebbar ist. Vorteilhaft kann auf diese Weise die Transportbahnlücke in unterschiedlichen Bereichen des Werkstückdurchlaufs entlang der Transportbahn eingestellt werden. Der Ummantelungsort des Werkstücks von unten kann somit frei und/oder in Abhängigkeit von der Geometrie des Werkstücks gewählt werden.

Nach einer Weiterbildung der Erfindung ist als Stellmittel ein die Trennrolle und gegebenenfalls weitere Umlenkrollen enthaltenen Rollenschlitten sowie eine in Transportrichtung auf dem Maschinenbett verlaufende Schiene vorgesehen, so dass der Rollenschlitten entlang der Schiene verschiebbar und über Arretiermittel in einer bestimmten Position entlang der Transportrichtung festlegbar ist. Vorteilhaft wird hierdurch eine Linearführung in Transportrichtung bereitgestellt, die ein einfaches und schnelles Verschieben bzw. Einstellen des U-förmigen Förderabschnitts ermöglicht.

Nach einer Weiterbildung der Erfindung ist eine Anzahl von das Endlosfördermittel von unten stützenden Trägersegmenten in Transportrichtung angeordnet. In einer Arbeitsposition der Trägersegmente sind die Trägersegmente aufrecht angeordnet. In einer Nichtarbeitsposition der Trägersegmente ist das Endlosfördermittel frei. Die Trägersegmente befinden sich in dem U-förmigen Förderabschnitt in der Nichtarbeitsposition, während sie sich an dem U-förmigen Abschnitts anschließenden ebenen Förderabschnitt, der die Transportbahnsegmente aufweist, sich in der Arbeitsposition befinden. Durch die Segmentierung der Trageinrichtung kann einfach der Ort des U-förmigen Förderabschnitts bzw. Nichtförderabschnitts eingestellt werden. Der Nichtförderabschnitt zur Ummantelung der Werkstücke von unten kann variabel eingestellt werden, wobei eine Erstreckung der Trägersegmente in Transportrichtung die kleinste Länge des Nichtförderabschnitts vorgibt.

Nach einer bevorzugten Ausführungsform der Erfindung sind die Trägersegmente schwenkbar um eine parallel zur Transportrichtung verlaufende Drehachse gelagert. Vorteilhaft können die Trägersegmente in der Nichtarbeitsposition den Raum für das Angreifen der Ummantelungswerkzeuge von einer unteren Seite her an die Werkstücke freigeben. Vorteilhaft können die Trägersegmente aufgrund ihres Eigengewichtes diesen Raum freigeben, wobei Sie in der Arbeitsposition eine aufrechte und in der Nichtarbeitsposition eine nach unten gekehrte und ebenfalls vertikale Position einnehmen.

Nach einer Weiterbildung der Erfindung ist das Endlosfördermittel als ein Endlosriemen ausgebildet, der über eine Antriebstrommel angetrieben und über die Rollen geführt in einem gespannten Zustand gehalten ist. Vorteilhaft ist ein Nachspannen auch bei Verschieben des Rollenschlittens nicht erforderlich.

Nach einer Weiterbildung der Erfindung ist ein Paar von Endlosriemen vorgesehen, die quer zur Transportrichtung versetzt angeordnet sind. Jeder Endlosriemen ist mit einer Antriebstrommel gekoppelt, deren Antrieb über ein gemeinsames Winkelgetriebe und einen gemeinsamen Motor erfolgt. Vorteilhaft kann hierdurch die Transportführung für die langgestreckten Werkstücke verbessert werden.

Nach einer Weiterbildung der Erfindung umfasst die Vorrichtung ein Antriebsmodul und ein Ummantelungsmodul, die über eine Kupplung lösbar miteinander verbunden sind. Das Antriebsmodul umfasst im Wesentlichen Antriebsaggregate, wie Motor und Getriebe. Das Ummantelungsmodul weist die eigentliche Ummantelungsmaschine mit der Fördereinrichtung und Ummantelungswerkzeugen auf. Die Vorrichtung weist somit einen modularen Aufbau auf, wobei in Abhängigkeit von dem aktuellen Profil der langgestreckten Werkstücke unterschiedliche Ummantelungsmodule von demselben Antriebsmodul betrieben werden können.

Nach einer Weiterbildung der Erfindung weist die Kupplung ein erstes Kupplungsteil mit einer ersten Profilscheibe und ein zweites Kupplungsteil mit einer zweiten Profilscheibe auf, wobei die erste Profilscheibe in Axialrichtung federnde Profilabschnitte und die zweite Profilscheibe in Axialrichtung starre Profilabschnitte aufweist. Die Kupplung kann nach einer Sternkupplung ausgebildet sein, wobei eine einfache Fixierung der Kupplungsteile erfolgt. Handhabungstechnisch einfach müssen die Kupplungsteile lediglich axial zusammengefügt werden. Mit Anlauf des Antriebes rasten die beiden Kupplungsteile dann automatisch ein, so dass eine drehfeste Verbindung zwischen dem ersten Kupplungsteil und dem zweiten Kupplungsteil gegeben ist.

Nach einer Weiterbildung der Erfindung weist das Ummantelungsmodul an beiden Stirnseiten jeweils ein Kupplungsteil auf zur lösbaren Verbindung mit dem Antriebsmodul und mit einem weiteren Maschinenmodul. Vorteilhaft können hierdurch mehrere Maschinenmodule in Transportrichtung hintereinander angeordnet sein, die jeweils über dasselbe Antriebsmodul betreibbar sind. Die Kupplungsteile an den Stirnenden der jeweiligen Maschinenmodule sind hierzu über eine Kardanwelle miteinander gekoppelt.

Nach einer Weiterbildung der Erfindung ist das Ummantelungsmodul und/oder das Maschinenmodul über Rollen bewegbar ausgebildet, so dass sie zur Umrüstung einfach von dem Fertigungsort, an dem sich das Antriebsmodul ortsfest befindet, entfernt bzw. hinbewegt werden kann.

Nach einer Weiterbildung der Erfindung sind der Endlosriemen und die demselben zugeordneten Rollen auf einen gemeinsamen Träger gehalten, der quer zur Transportrichtung verschiebbar gelagert ist. Vorteilhaft kann hierdurch eine Breiteneinstellung des Paares von Endlosriemen in Abhängigkeit von der Geometrie der Werkstücke erfolgen.

Weitere Vorteile der Erfindung ergeben sich aus den weiteren Unteransprüchen.

Ein Ausführungsbeispiel der Erfindung wird nachfolgend anhand der Zeichnungen näher erläutert.

Es zeigen:

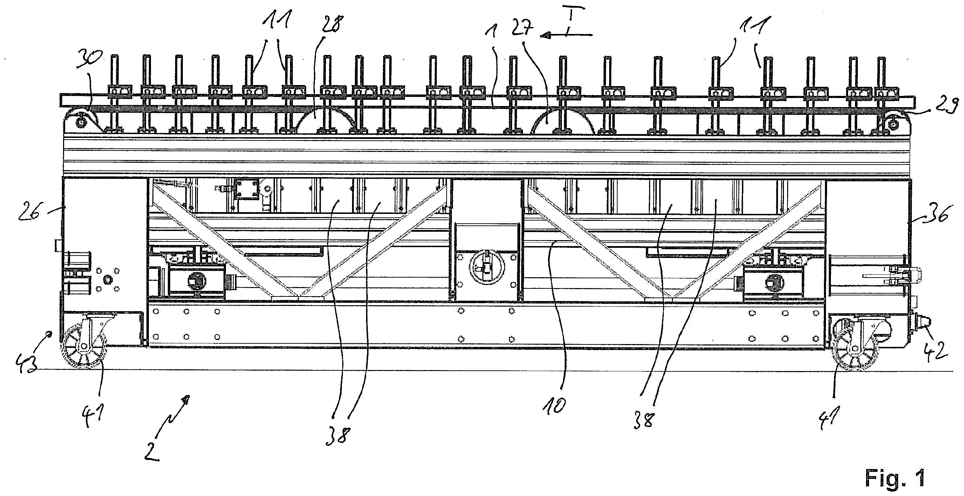

- Fig. 1: eine Seitenansicht eines Ummantelungsmoduls mit mehreren in Transportrichtung hintereinander angeordneten und von oben und/oder unten auf ein zu ummantelndes langgestrecktes Werkstück angreifende Ummantelungswerkzeuge,
- Fig. 2: eine Stirnansicht des Ummantelungsmoduls gemäß Figur 1,
- Fig. 3: eine Seitenansicht des Ummantelungsmoduls gemäß Figur 1, wobei eine Seitenwange mit Ummantelungswerkzeugen weggelassen worden sind,

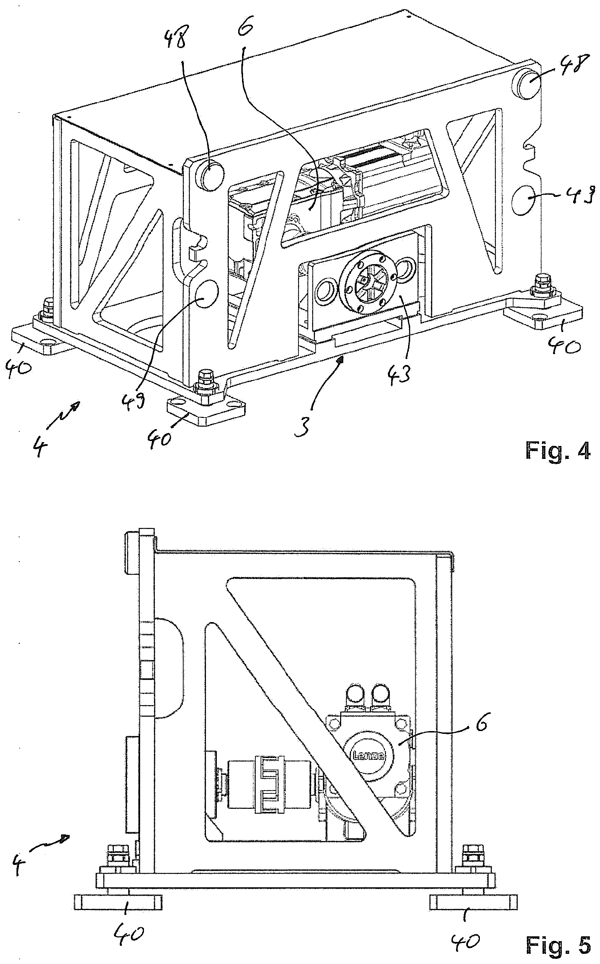

- Fig. 4: eine perspektivische Vorderansicht eines Antriebsmoduls, das über eine Kupplung mit dem Ummantelungsmodul koppelbar ist,
- Fig. 5: eine Seitenansicht des Antriebsmoduls,

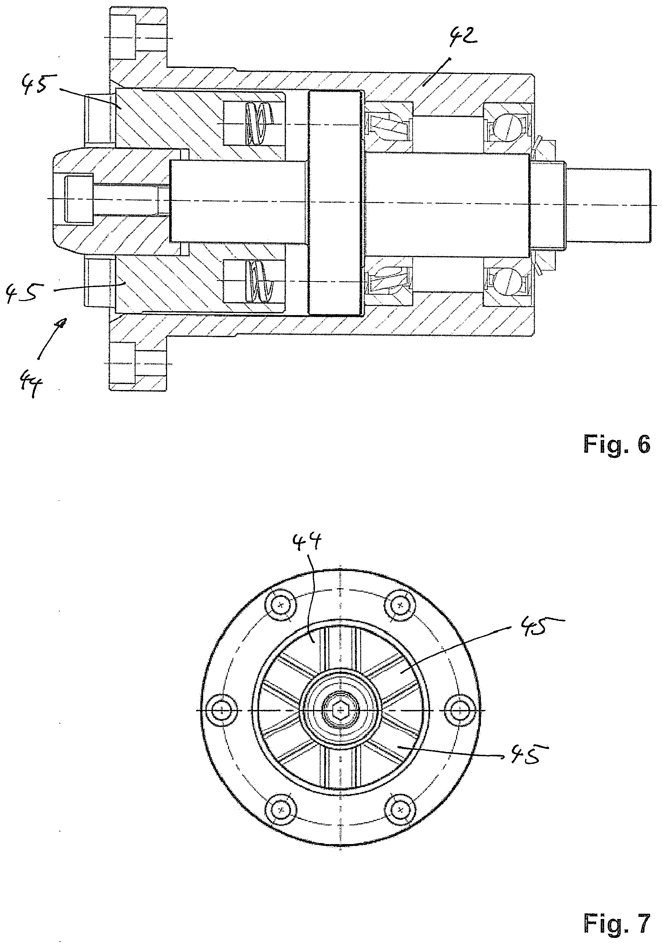

- Fig. 6: einen Längsschnitt durch ein erstes Kupplungsteil der Kupplung,
- Fig. 7: eine Stirnansicht des ersten Kupplungsteils gemäß Figur 6,

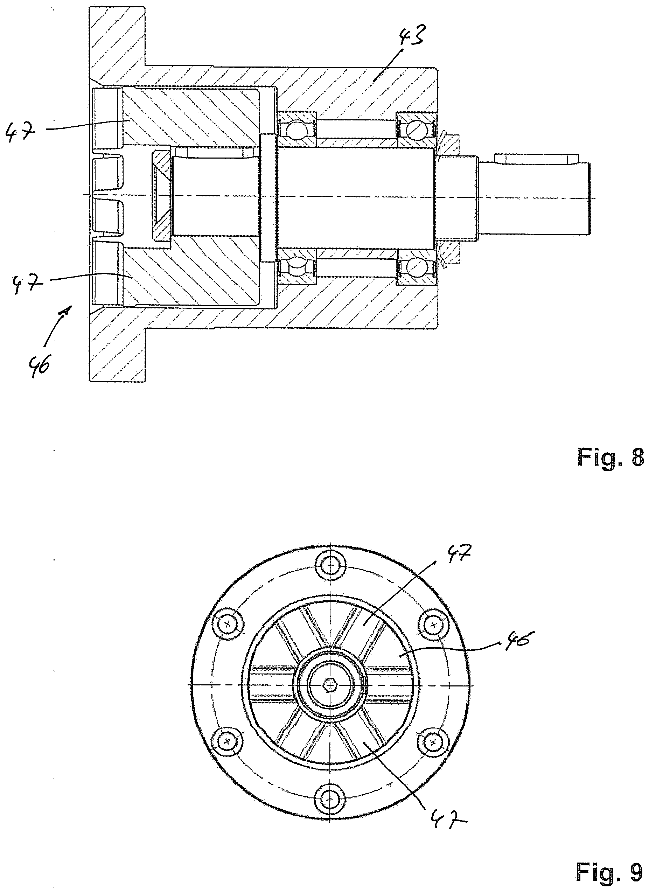

- Fig. 8: ein Längsschnitt durch ein zweites Kupplungsteil der Kupplung und
- Fig. 9: eine Stirnansicht des zweiten Kupplungsteil gemäß Figur 8.

Eine erfindungsgemäße Vorrichtung zur Ummantelung von langgestreckten Werkstücken 1 weist im Wesentlichen ein Ummantelungsmodul 2 und ein über eine Kupplung 3 mit derselben verbundenes Antriebsmodul 4 auf. Das Ummantelungsmodul 2 dient zur Ummantelung des langgestreckten Werkstücks 1 mit einem Ummantelungsmaterial 5, beispielsweise einem funierartigen Ummantelungsmaterial 5, das im Wege eines Durchlaufverfahrens nach und nach auf das profilierte Werkstück 1 aufgeklebt bzw. laminiert wird. Das Antriebsmodul 4 weist als Antrieb einen Motor 6 auf, der gegebenenfalls über ein Getriebe und die Kupplung 3 mit einer in Transportrichtung T bzw. in Längsrichtung des Ummantelungsmoduls 2 verlaufenden Kardanwelle 7 verbunden ist. Gegebenenfalls kann der Motor 6 des Antriebsmoduls 4 als ein Kegelradgetriebemotor ausgebildet sein.

Das Ummantelungsmodul 2 ist derart ausgebildet, dass das langgestreckte Werkstück 1 vollständig ummantelt werden kann. Das langgestreckte Werkstück 1 kann beispielsweise als eine langgestreckte Platte oder Leiste ausgebildet sein, die gegenüberliegende Flachseiten 8 und dieselben verbindende gegenüberliegende Schmalseiten 9 aufweist. Die Schmalseiten 9 können insbesondere profiliert ausgebildet sein. Die langgestreckte Platte 1 kann aus einem Holz- und/oder Kunststoffmaterial bestehen, das nach Fertigstellung der Ummantelung abgelängt und dann als Bauteil für einen Tischfuss dienen kann.

Das Ummantelungsmodul 2 (Ummantelungsmaschine) weist in üblicher Weise ein Maschinenbett 10 auf, an dem sich als Traggestell für Ummantelungswerkzeuge 11 Seitenwangen 12 erheben. An der Oberseite der Seitenwangen 12 sind die Ummantelungswerkzeuge 11 montiert, die mit Andruckrollen 13 auf das langgestreckte Werkstück 1 drückend abrollen, wobei zwischen dem Werkstück 1 und der Andruckrolle 13 das Ummantelungsmaterial 5 an dem Werkstück 1 angepresst wird. Das Ummantelungsmaterial 5 weist auf einer dem Werkstück zugewandten Seite eine Klebstoff- bzw. Laminierschicht auf, so dass nach Andrücken des Ummantelungsmaterials 5 eine haftende Verbindung zwischen dem Ummantelungsmaterial 5 und dem Werkstück 1 besteht.

Ferner weist das Ummantelungsmodul 2 eine Fördereinrichtung 14 zum Transportieren der langgestreckten Werkstücke 1 in der Transportrichtung T auf. Die Fördereinrichtung 14 umfasst eine Mehrzahl von Transportrollen und ein denselben zugeordnetes Endlosfördermittel, das im vorliegenden Ausführungsbeispiel als Endlosriemen 15 ausgebildet ist. Gegebenenfalls kann das Endlosfördermittel auch als Kette oder Seil ausgebildet sein. Der Endlosriemen 15 wird über eine Antriebstrommel 16, die über ein Zahnrad verfügt und über ein Winkelgetriebe 17 mit der Kardanwelle 7 gekoppelt ist, angetrieben. Darüber hinaus sind dem Endlosriemen 15 weitere Rollen bzw. Umlenkrollen zugeordnet, so dass ein Obertrum 19 zur Aufnahme der Werkstücke 1 und ein Untertrum 20, an dem kein Werkstück 1 anliegt, gebildet wird.

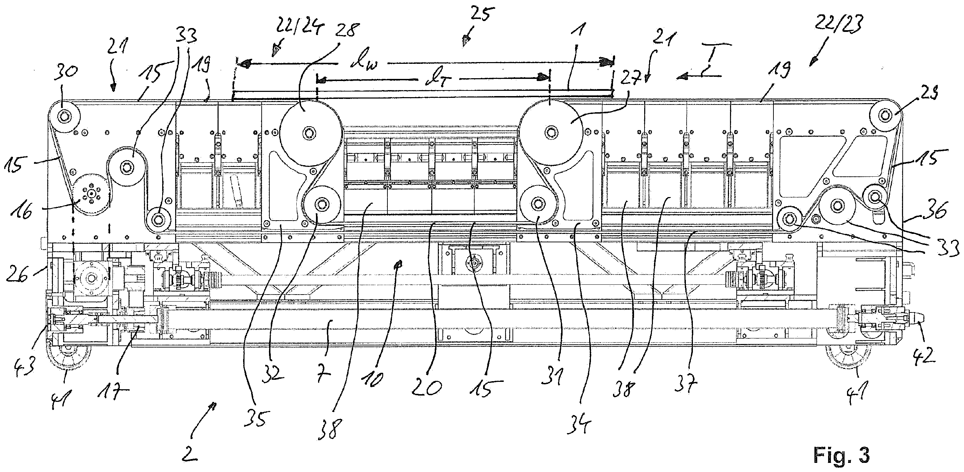

Wie besser aus Figur 3 ersichtlich ist, erstreckt sich das Obertrum 19 des Endlosriemens 15 nicht über die gesamte Transportbahn 21 des Ummantelungsmoduls 2, sondern nur teilweise in einem Förderabschnitt 22. Im vorliegenden Ausführungsbeispiel bildet der Förderabschnitt 22 einen ersten Transportbahnabschnitt 23 und einen zweiten Transportbahnabschnitt 24, die von einem Nichtförderabschnitt 25, der als U-förmiger Riemenabschnitt (U-förmiger Endlosförderabschnitt) ausgebildet ist, getrennt sind. Der Nichtförderabschnitt 25 bildet eine Lücke bzw. Freiraum der Transportbahn 21, in der das Werkstück 1 von einer Unterseite her ummantelt werden kann. In dem Nichtförderabschnitt 25 können somit die Ummantelungswerkzeuge 11 so angeordnet sein, dass das Ummantelungsmaterial 5 an einer Unterseite des Werkstücks 1, also das Ummantelungsmaterial 5 an die untere Flachseite 8' des Werkstücks 1 anpressen kann, nicht dargestellt. Im vorliegenden Ausführungsbeispiel erfolgt die Ummantelung des Werkstücks 1 von unten in einen mittleren Bereich des Ummantelungsmoduls 2. Wenn das Ummantelungsmaterial 5 schlauchförmig nach und nach um das Werkstück 1 umgelegt werden soll, kann der Nichtförderabschnitt 25 auch im Bereich einer in Transportrichtung T vorderen Stirnseite 26 des Ummantelungsmoduls 2 angeordnet sein. Bei dieser nicht dargestellten Ausführungsform weist das Ummantelungsmodul 2 einen relativ langen ersten Transportbahnabschnitt 23 und einen relativ kurzen zweiten Transportbahnabschnitt 24 auf.

Wie aus Figur 3 ersichtlich ist, weist der Nichtförderabschnitt 25 einen Länge l_{T} auf, die kleiner ist als eine Länge l_{W} des Werkstücks 1. Diese Bedingung muss erfüllt sein, damit das Werkstück 1 nicht aus der Transportbahn 21 herausfallen kann.

Das Obertrum 19 des Endlosriemens 15 wird im ersten Transportbahnabschnitt 23 durch eine erste Trennrolle 27 und eine an einer in Transportrichtung T hinten angeordnete "erste" Umlenkrolle 29 begrenzt, die im Bereich einer in Transportrichtung T hinten angeordneten Stirnseite 36 des Ummantelungsmoduls 2 angeordnet ist. Das Obertrum 19 des Endlosriemens 15 im zweiten Transportbahnabschnitt 24 wird durch eine zweite Trennrolle 28 und eine zweite Umlenkrolle 30 begrenzt, wobei die zweite Umlenkrolle 30 im Bereich der in Transportrichtung T gesehen vorderen Stirnseite 26 des Ummantelungsmoduls 2 angeordnet ist. An der ersten Trennrolle 27 und der zweiten Trennrolle 28 wird der Endlosriemen 15 nach unten umgelenkt in Richtung einer weiteren Umlenkrolle 31, 32, die im Wesentlichen senkrecht zur Transportrichtung T versetzt zu der ersten Trennrolle 27 bzw. zweiten Trennrolle 28 angeordnet sind. An den Umlenkrollen 31 bzw. 32 erfolgt eine Umlenkung zum im Nichtförderabschnitt 25 verlaufenden Untertrum 20, der sich unterhalb der Transportbahn 21 erstreckt. Weitere Umlenkrollen 33 sind vorgesehen, damit das Untertrum 20 in den Förderabschnitten 22 nach oben zur Transportbahn 21 umgelenkt wird.

Das Obertrum 19 des Endlosriemens 15 verläuft in dem ersten Transportbahnabschnitt 23 und in dem zweiten Transportbahnabschnitt 24 oberhalb von Trägersegmenten 38, die zur Stützung des Obertrums 19 dienen.

Damit der Nichtförderabschnitt 25 variabel in einem gewünschten Längsabschnitt des Ummantelungsmoduls 2 eingestellt werden kann, sind jeweils die erste Trennrolle 27 und die erste Umlenkrolle 29 einerseits sowie die zweite Trennrolle 28 und die zweite Umlenkrolle 30 andererseits in einem ersten Rollenschlitten 34 bzw. zweiten Rollenschlitten 35 integriert angeordnet, die jeweils verschiebbar auf einer in Transportrichtung T verlaufenden Schiene 37 angeordnet sind. Damit der erste Rollenschlitten 34 bzw. 35 in Längsrichtung des Ummantelungsmoduls auf dem Schlitten 37 verschoben werden kann, müssen jeweilige Trägersegmente 38 aus der aufrechten Arbeitsposition in eine den Weg für den Rollenschlitten 34 bzw. 35 freigebenden Nichtarbeitsposition verbracht werden. Im vorliegenden Ausführungsbeispiel sind die Trägersegmente 38 schwenkbar um eine parallel zur Transportrichtung T bzw. zur Längserstreckung des Ummantelungsmoduls 2 verlaufenden Drehachse angeordnet, so dass sie in der Nichtarbeitsposition nach unten hin geklappt angeordnet sind, während sie in der Arbeitsposition aufrecht angeordnet sind. Die in Transportrichtung T verlaufende Länge der nach unten umgeklappten Trägersegmente 38 gibt die in Transportrichtung T verlaufende Länge des Nichtförderabschnittes 25 vor. Im vorliegenden Ausführungsbeispiel sind die Trägersegmente 38 in Transportrichtung T des Ummantelungsmoduls 2 gleichlang ausgebildet. Zum Einstellen des Nichtförderabschnitts 25 werden somit zuerst die Trägersegmente 38 von der Arbeitsposition in die Nichtarbeitsposition verschwenkt, die sich im Bereich des gewünschten Nichtförderabschnitts 25 befinden. Danach wird der erste Rollenschlitten 34 und gegebenenfalls der zweite Rollenschlitten 35 in die den Nichtförderabschnitt begrenzende Position linear verschoben. Nachfolgend werden die auf deren Nichtförderabschnitt 25 abgewandten Seite des ersten Rollenschlittens 34 bzw. zweiten Rollenschlittens 35 angeordneten Trägersegmente 38 von der Nichtarbeitsposition in die Arbeitsposition verschwenkt.

Im vorliegenden Ausführungsbeispiel ist ein Paar von Fördermitteln vorgesehen, wobei die Fördermittel gleich und horizontal versetzt zueinander angeordnet sind. Das Ummantelungsmodul 2 weist somit zwei parallele Stränge von Fördermitteln auf, die jeweils durch einen Endlosriemen 15 und denselben zugeordnete Rollen gebildet werden. Hierdurch liegen die Werkstücke 1 während des Transports auf zwei Endlosriemen 15 auf. Die Antriebsrollen 16 dieser paarweise angeordneten Fördermittel sind über das Winkelgetriebe 17 mit dem Antriebsstrang bzw. Kardanwelle 7 gekoppelt.

Die modulartige Ausbildung der Vorrichtung mit dem Antriebsmodul 4, das über Füße 40 feststehend ausgebildet ist und einer oder mehreren Ummantelungsmodulen 2, die über Rollen 41 bewegbar ausgebildet sind, kann auf einfache Weise eine Umrüstung erfolgen. Hierzu braucht lediglich ein erstes Ummantelungsmodul 2 durch ein zweites Ummantelungsmodul ersetzt werden. Hierzu dient die Kupplung 3, die aus einem ersten Kupplungsteil 42 und einem zweiten Kupplungsteil 43 besteht. Das erste Kupplungsteil 42 weist stirnseitig eine erste Profilscheibe 44 mit in Axialrichtung federnden Profilabschnitten 45 auf. Das zweite Kupplungsteil 43 weist stirnseitig eine zweite Profilscheibe 46 mit einem starren Profilabschnitt 47 auf. Die erste Profilscheibe 44 und die zweite Profilscheibe 46 sind sternförmig und komplementär zueinander ausgebildet. Im vorliegenden Ausführungsbeispiel ist das erste Kupplungsteil 42 an der in Transportrichtung T hinteren Stirnseite 36 des Ummantelungsmoduls 2 angeordnet und das zweite Kupplungsteil 43 an der Stirnseite des Antriebsmoduls 4. Zur antriebsmäßigen Kopplung des Ummantelungsmoduls 2 an das Antriebsmodul 4 wird das Ummantelungsmodul 2 in Längsrichtung desselben bzw. in Axialrichtung des zueinander fluchtenden ersten Kupplungsteils 42 und des zweiten Kupplungsteils 43 des Antriebsmoduls 4 an dasselbe heranbewegt, so dass die starre zweite Profilscheibe 46 des zweiten Kupplungsteils 43 die erste flexible Profilscheibe 44 in das erste Kupplungsteil 42 hineindrückt. Zur fluchtenden Verbindung des ersten Kupplungsteils 42 mit dem zweiten Kupplungsteil 43 sind zusätzliche Zapfen 48 bzw. Ausnehmungen 49 zur Aufnahme der Zapfen 48 an den Stirnseiten des Ummantelungsmoduls 2 bzw. des Antriebsmoduls 4 vorgesehen. Nach diesem Andocken des Ummantelungsmoduls 2 an dem Antriebsmodul 4 erfolgt selbsttätig durch Einschalten des Antriebsmoduls 4 ein Einrasten der ersten Profilscheibe 44 mit der zweiten Profilscheibe 45. Auf diese Weise ist eine Drehmomenteinleitung von dem Antriebsmodul 4 in das Ummantelungsmodul 2 zum Antrieb der Fördermittel gewährleistet.

Vorzugsweise weist das Ummantelungsmodul 2 auf der in Transportrichtung T vorderen Stirnseite 26 ein zweites Kupplungsteil 43 auf, so dass das Ummantelungsmodul 2 auf einer dem Antriebsmodul 4 abgewandten Seite mit einem weiteren nicht dargestellten Maschinenmodul über die Kupplung 3 verbindbar ist. Fördermittel des Maschinenmoduls können somit von demselben Antriebsmodul 4 angetrieben werden wie das Ummantelungsmodul 2.

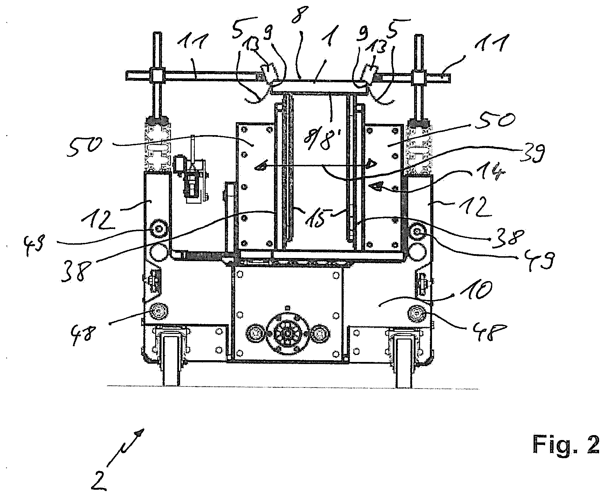

Die Werkstücke 1 liegen linienförmig auf den Endlosriemen 15 auf. Im vorliegenden Ausführungsbeispiel sind Endlosriemen 15 paarweise angeordnet, so dass das Werkstück 1 jeweils in einem zu den Schmalseiten 9 desselben nahen Bereichs linienförmig aufliegt. Damit unterschiedlich breite Werkstücke 1 optimal in dem Ummantelungsmodul 2 aufliegen, sind Träger 50 der Trägersegmente 38 bzw. der Rollen 18 quer zur Transportrichtung T bzw. in horizontaler Richtung quer zum Ummantelungsmodul 2 verschiebbar gelagert (s. Pfeil 39 in Figur 2). Vorteilhaft kann hierdurch eine optimale Breiteneinstellung der paarweise angeordneten Endlosriemen 15 für unterschiedlich breit ausgebildete Werkstücke 1 erfolgen.

## Patentansprüche

1. Vorrichtung zur Ummantelung von langgestreckten Werkstücken (1) mit einem Ummantelungsmodul (2) umfassend
- ein in Transportrichtung (T) der Werkstücke (1) verlaufendes Maschinenbett (10),
- eine Fördereinrichtung (14) zum Transportieren der Werkstücke (1) in der Transportrichtung (T),
- eine Anzahl von in Transportrichtung (T) hintereinander angeordneten Ummantelungswerkzeugen (11) zum Anpressen des Ummantelungsmaterials (5) an die Werkstücke (1),
**dadurch gekennzeichnet, dass** die Fördereinrichtung (14) ein Endlosfördermittel (15) zur Bildung einer die Werkstücke (1) auf einem Obertrum (19) des Endlosfördermittels (15) aufnehmenden Transportbahn (21) aufweist.

2. Vorrichtung nach Anspruch 1, **dadurch gekennzeichnet, dass** das Endlosfördermittel (15) über eine Mehrzahl von Rollen (16, 27, 28, 29. 30, 31, 32, 33) unter Bildung eines die Transportbahn (21) in mindestens zwei Transportsegmente (23, 24) teilenden U-förmigen Nichtförderabschnitt (25) geführt angeordnet ist, wobei der U-förmige Nichtförderabschnitt (25) durch zwei in Transportrichtung (T) beabstandet zueinander angeordnete Trennrollen (27, 28) begrenzt ist, an denen das Endlosfördermittel (15) von der Transportbahn (21) weg umgelenkt wird, und dass Stellmittel vorgesehen sind zum Bewegen mindestens einer Trennrolle (27, 28) in Transportrichtung (T), so dass eine Länge und/oder ein Ort der Transportsegmente (23, 24) einstellbar ist.

3. Vorrichtung nach Anspruch 1 oder 2, **dadurch gekennzeichnet, dass** als Stellmittel ein die Trennrolle (27, 28) und eine senkrecht zur Transportrichtung (T) versetzt zu derselben angeordnete Umlenkrolle (31, 32) aufnehmender Rollenschlitten (34, 35) und eine in Transportrichtung (T) verlaufende Schiene (37) vorgesehen sind, wobei der Rollenschlitten (34, 35) verschiebbar auf der Schiene (37) gelagert ist.

4. Vorrichtung nach einem der Ansprüche 1 bis 3, **dadurch gekennzeichnet, dass** in Transportrichtung (T) eine Mehrzahl von das Endlosfördermittel (15) stützenden Trägersegmenten (38) vorgesehen sind, die in einer Arbeitsposition, in der die Schiene (37) für das Verschieben des Rollenschlittens (34, 35) blockiert ist, und die in eine Nichtarbeitsposition, in der die Schiene (37) für das Verschieben des Rollenschlittens (34, 35) freigegeben ist, bringbar sind.

5. Vorrichtung nach einem der Ansprüche 1 bis 4, **dadurch gekennzeichnet, dass** die Trägersegmente (38) schwenkbar um eine parallel zu Transportrichtung (T) verlaufende Drehachse gelagert sind.

6. Vorrichtung nach einem der Ansprüche 1 bis 5, **dadurch gekennzeichnet, dass** das Endlosfördermittel (15) als ein Endlosriemen ausgebildet ist, der über eine Antriebstrommel (16) angetrieben und über die Rollen (27, 28, 29, 30, 31, 32, 33) geführt im gespannten Zustand gehalten ist.

7. Vorrichtung nach einem der Ansprüche 1 bis 6, **dadurch gekennzeichnet, dass** ein Paar von horizontal versetzt zueinander angeordneten Endlosriemen (15) vorgesehen sind, wobei die jeweils den Endlosriemen (15) zugeordneten Antriebstrommeln (16) über ein gemeinsames Winkelgetriebe (17) mit demselben Antrieb gekoppelt sind.

8. Vorrichtung nach einem der Ansprüche 1 bis 7, **dadurch gekennzeichnet, dass** Fördermittel des Ummantelungsmoduls (2) über eine Kupplung (3) mit Antriebsmitteln eines Antriebsmoduls (4) lösbar verbunden sind.

9. Vorrichtung nach einem der Ansprüche 1 bis 8, **dadurch gekennzeichnet, dass** die Kupplung (3) ein erstes Kupplungsteil (42) mit einer ersten Profilscheibe (44) und ein zweites Kupplungsteil (43) mit einer komplementär zu derselben ausgebildeten zweiten Profilscheibe (46) umfasst, wobei die erste Profilscheibe (44) in Axialrichtung federnde Profilabschnitte (45) und die zweite Profilscheibe (46) in Axialrichtung starre Profilabschnitte (47) aufweist.

10. Vorrichtung nach einem der Ansprüche 1 bis 9, **dadurch gekennzeichnet, dass** das Ummantelungsmodul (2) an beiden Stirnseiten (26, 36) jeweils ein Kupplungsteil (42, 43) aufweist zur lösbaren Verbindung mit dem Antriebsmodul (4) und mit einem weiteren Maschinenmodul.

11. Vorrichtung nach einem der Ansprüche 1 bis 10, **dadurch gekennzeichnet, dass** das Ummantelungsmodul (2) über Rollen (41) bewegbar und dass das Antriebsmodul (4) über Füße (40) feststehend ausgebildet ist.

12. Vorrichtung nach einem der Ansprüche 1 bis 11, **dadurch gekennzeichnet, dass** der Endlosriemen (15) und die Rollen (27, 28, 29, 30, 31, 32, 33) an einem in Transportrichtung (T) verlaufenden Träger (50) gehalten sind und dass der Träger (50) quer zur Transportrichtung (T) horizontal verschiebbar gelagert ist.

13. Vorrichtung nach einem der Ansprüche 1 bis 12, **dadurch gekennzeichnet, dass** die Antriebstrommel (16) des Ummantelungsmoduls (2) im Bereich der zu dem Antriebsmodul (4) abgewandt angeordneten Stirnseite (26) des Ummantelungsmoduls (2) angeordnet ist.

14. Vorrichtung nach einem der Ansprüche 1 bis 13, **dadurch gekennzeichnet, dass** das an der dem Antriebsmodul (4) zugewandten Stirnseite (36) angeordnete Kupplungsteil (42) und das an der dem Antriebsmodul (4) abgewandten Stirnseite (26) angeordnete Kupplungsteil (43) des Ummantelungsmoduls (2) über eine Kardanwelle (7) miteinander verbunden sind.
